(19) Europäisches Patentamt
European Patent Office
Office européen des brevets

(11) **EP 3 764 559 A1**

(12) **EUROPEAN PATENT APPLICATION**
published in accordance with Art. 153(4) EPC

(43) Date of publication:
**13.01.2021 Bulletin 2021/02**

(21) Application number: **19764425.5**

(22) Date of filing: **07.03.2019**

(51) Int Cl.:
**H04B 7/04** *(2017.01)*    **H04B 7/26** *(2006.01)*

(86) International application number:
**PCT/CN2019/077268**

(87) International publication number:
**WO 2019/170119 (12.09.2019 Gazette 2019/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.03.2018  CN 201810187882**

(71) Applicant: **ZTE Corporation
Guangdong 518057 (CN)**

(72) Inventors:
• **AI, Xingxing
  Shenzhen, Guangdong 518057 (CN)**
• **XU, Ying
  Shenzhen, Guangdong 518057 (CN)**

(74) Representative: **Lavoix
Bayerstrasse 83
80335 München (DE)**

(54) **SIGNAL PROCESSING METHOD, MULTI-STAGE DISTRIBUTED ANTENNA SYSTEM AND STORAGE MEDIUM**

(57)     Provided is a signal processing method applied to a multi-stage distributed antenna system. The multi-stage distributed antenna system includes a baseband pool and at least one radio remote unit, where the at least one radio remote unit is divided into at least one stage. The method includes steps described below. A first radio remote unit performs a signal processing on received uplink signals according to a preset combination strategy to acquire a first signal, where the first radio remote unit is a radio remote unit of a stage in the at least one stage; and the first radio remote unit uploads the first signal to the baseband pool.

A first radio remote unit performs a combination processing on received uplink signals according to a preset combination strategy to acquire a first signal, where the first radio remote unit is a radio remote unit of a stage in the at least one stage — S210

The first radio remote unit uploads the first signal the baseband pool — S220

**FIG. 2**

EP 3 764 559 A1

## Description

This application claims priority to Chinese patent application No. 201810187882.5 filed with CNIPA on March 07, 2018, disclosure of which is incorporated herein by reference in its entirety.

TECHNICAL FIELD

The present application relates the field of wireless communication technologies, for example, to a signal processing method, a multi-stage distributed antenna system and a storage medium.

BACKGROUND

At present, a distributed base station usually adopts the architecture of a building base band unit (BBU) and a radio remote unit (RRU). The BBU and the RRU are connected to each other using optical fiber, the BBU is responsible for baseband processing, while the RRU is responsible for intermediate radio frequency processing, and the optical fiber is responsible for transmitting baseband time domain signals.

In the related art, one BBU and one RRU serve a cell, and there is relatively few cooperation between cells. With the emergence of an array antenna, the RRU needs to process more and more radio frequency channels, and the optical fiber needs to transmit more and more semaphores. In order to improve the experience of users on a cell edge and with the introduction of the user-centered concept, a baseband pool composed of multiple BBUs is usually used for centralized processing of baseband signals. That is, the RRU needs to transmit a large number of signals to the baseband pool, and the baseband pool performs various processes. However, the performance of a related distributed antenna system is limited and cannot satisfy requirements of processing and transmitting a large number of baseband signals and intermediate frequency signals.

SUMMARY

The following is a summary of the subject matter described herein in detail. This summary is not intended to limit the scope of the claims.

Embodiments of the present application provide a signal processing method, a multi-stage distributed antenna system and a storage medium. A signal processing is performed based on the constructed multi-stage distributed antenna system, which can reduce the signal transmission amount and satisfy requirements of a large-scale network.

The embodiments of the present application provide a signal processing method applied to a multi-stage distributed antenna system. The multi-stage distributed antenna system includes a baseband pool and at least one radio remote unit which is divided into at least one stage. The method includes steps described below. A first radio remote unit performs a combination processing on received uplink signals according to a preset combination strategy to acquire a first signal, where the first radio remote unit is a radio remote unit of a stage in the at least one stage; and the first radio remote unit uploads the first signal to the baseband pool.

The embodiments of the present application provide a multi-stage distributed antenna system, which includes a baseband pool and at least one first radio remote unit, the at least one radio remote unit is divided into at least one stage. The first radio remote unit is configured to: perform, according to a preset combination strategy, a combination processing on received uplink signals to acquire a first signal, and upload the first signal to the baseband pool, where the first radio remote unit is a radio remote unit of any stage in the at least one stage; and the baseband pool is configured to receive the first signal.

The embodiments of the present application provide a radio remote unit, and the radio remote unit includes a processor, a memory and a communication bus. The communication bus is configured to implement a connection communication between the processor and the memory. The processor is configured to execute a signal processing program stored in the memory to implement the signal processing method described above.

The embodiments of the present application further provide a computer-readable storage medium storing at least one program. The at least one program is executable by at least one processor to perform the signal processing method described above.

Other aspects may be understood after the drawings and the detailed description are read and understood.

BRIEF DESCRIPTION OF DRAWINGS

FIG. 1 is an exemplarily diagram of a multi-stage distributed antenna system according to an embodiment of the present application;

FIG. 2 is a flowchart one of a signal processing method according to an embodiment of the present application;

FIG. 3 is a flowchart of performing a combination processing on uplink signals according to an embodiment of the present application;

FIG. 4 is an exemplarily diagram of combining uplink signals according to an embodiment of the present application;

FIG. 5 is an exemplarily diagram of signal transmission according to an embodiment of the present application;

FIG. 6 is a flowchart two of a signal processing method according to an embodiment of the present application;

FIG. 7 is a flowchart of performing a weighted processing on downlink signals according to an embodiment of the present application;

FIG. 8 is an exemplarily diagram of issuing weighted values according to an embodiment of the present application;

FIG. 9 is a structural diagram of a multi-stage distributed antenna system according to an embodiment of the present application; and

FIG. 10 is a structural diagram of a first radio remote unit according to an embodiment of the present application.

DETAILED DESCRIPTION

Technical solutions in the embodiments of the present application will be described clearly and completely in conjunction with the drawings in the embodiments of the present application.
A multi-stage distributed antenna system is provided in the embodiments of the present application. The multi-stage distributed antenna system includes a baseband pool and at least one radio remote unit, and the at least one radio remote unit is divided into at least one stage. The specific number of radio remote units and the division of stages of the radio remote units are not limited in the embodiments of the present application.
It is to be noted that, in the embodiments of the present application, the number of lower-stage radio remote units connected to each radio remote unit of the multi-stage distributed antenna system is flexible and variable, and the specific connection manner of the radio remote units is not limited in the embodiments of the present application.

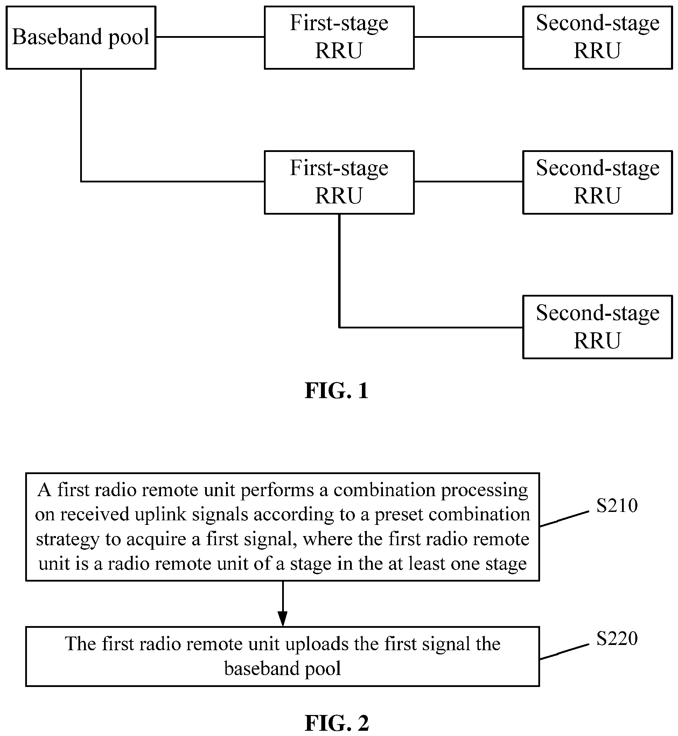

FIG. 1 is an exemplarily diagram of a multi-stage distributed antenna system according to an embodiment of the present application. As shown in FIG. 1, the multi-stage distributed antenna system includes a baseband pool, two first-stage radio remote units and three second-stage radio remote units. Each of the two first-stage radio remote units is directly connected to the baseband pool, one second-stage radio remote unit is directly connected to one first-stage radio remote unit, and each of the other two second-stage radio remote units is directly connected to the other first-stage radio remote unit.
It is to be noted that, in the embodiments of the present application, a signal processing may be performed on received uplink signals or downlink signals in a radio remote unit of each stage, after the signal processing is performed, these signals are transmitted to a higher-stage radio remote unit, and finally uploaded to the baseband pool, or the signals after the signal processing are issued to a lower-stage radio remote unit. For the uplink signals, the radio remote unit is also required to perform a space-multiplexing performance evaluation according to the received uplink signals to acquire information about the space-multiplexing performance evaluation, which is transmitted to the higher-stage radio remote unit simultaneously and finally uploaded to the baseband pool. The baseband pool performs corresponding operations according to the processed uplink signals and the information about the space-multiplexing performance evaluation. For the downlink signals, the processed downlink signals are continuously transmitted to the lower-stage radio remote unit, and finally fed back to users to provide services for the users.
Based on the above-mentioned multi-stage distributed antenna system, the present application provides a signal processing method in the radio remote unit of each stage.

Embodiment one

The embodiments of the present application provide a signal processing method. The method is applied to a multi-stage distributed antenna system. FIG. 2 is a flowchart one of a signal processing method according to an embodiment of the present application. As shown in FIG. 2, the signal processing method includes steps S210 and S220.

In step S210, a first radio remote unit performs a combination processing on received uplink signals according to a preset combination strategy to acquire a first signal, where the first radio remote unit is a radio remote unit of any stage in the at least one stage.

In an embodiment of the present application, the first radio remote unit may receive the uplink signals and then performs the combination processing on the uplink signals, that is, the uplink signals after the combination processing are the first signal.

It is to be noted that, in the embodiments of the present application, the number of the uplink signals received by the first radio remote unit may be multiple, and the uplink signals may be acquired by uploading from a lower-stage radio remote unit directly connected to the first radio remote unit, or may also be acquired by transmission of a same-stage radio remote unit directly connected to the first radio remote unit, and the specific uplink signals are not limited in the embodiments of the present application.

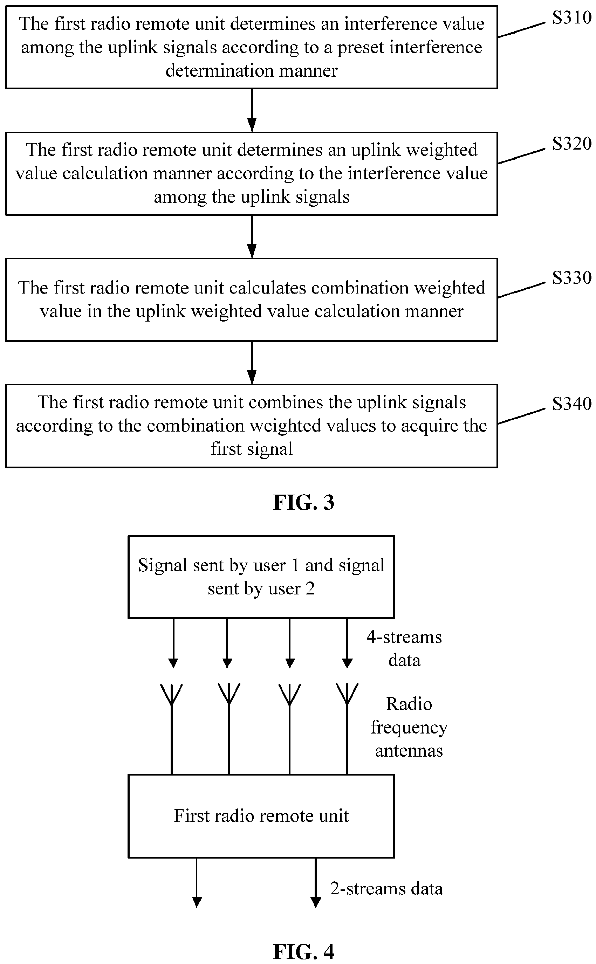

In the embodiments of the present application, FIG. 3 is a flowchart of performing a combination processing on uplink signals according to an embodiment of the present application. As shown in FIG. 3, the combination processing includes steps S310 to S340.

In step S310, the first radio remote unit determines an interference value among the uplink signals according to a preset interference determination manner.

It is to be noted that, in the embodiments of the present application, the preset interference determination manner may be autonomously preset in the first radio remote unit, and the specific preset interference determination manner is not limited in the embodiments of the present application.

It can be understood that the preset interference determination manner may detect signal characteristics of the uplink signals, such as noise and other information, so as to measure the interference value among the uplink signals.

It can be understood that an interference among first signals is actually an influence generated among the uplink signals. Exemplarily, in response to determining that the first radio remote unit receives a signal sent by a user 1 and a signal sent by a user 2, that is, the first radio remote unit receives two uplink signals, there is an interference between these two uplink signals; or, in response to determining that the first radio remote unit receives the signal sent by the user 1 or the signal sent by the user 2, that is, the first radio remote unit receives one uplink signal, there is no interference between the uplink signals.

In step S320, the first radio remote unit determines an uplink weighted value calculation manner according to the interference value among the uplink signals.

In an embodiment of the present application, the first radio remote unit determines the uplink weighted value calculation manner according to the interference value among the uplink signals.

In an embodiment of the present application, the step in which the first radio remote unit determines the uplink weighted value calculation manner according to the interference value among the uplink signals includes steps described below. In response to determining that the interference value among the uplink signals is greater than or equal to a preset interference threshold, the first radio remote unit determines a first weighted value calculation manner as the uplink weighted value calculation manner; and in response to determining that the interference value among the uplink signals is less than the preset interference threshold, the first radio remote unit determines a second weighted value calculation manner as the uplink weighted value calculation manner.

It is to be noted that, in the embodiments of the present application, the preset interference threshold is stored in the first radio remote unit, and the specific preset interference threshold is not limited in the embodiments of the present application.

It is to be noted that, in the embodiments of the present application, weighted value calculation manners suitable for the uplink signals are preset in the first radio remote unit, and the specific weighted value calculation manners suitable for the uplink signals are not limited in the embodiments of the present application.

In an embodiment of the present application, the weighted value calculation manners, preset in the first radio remote unit, suitable for the uplink signals include maximum ratio combination and minimizing mean square error, and the preset interference threshold is A. In response to determining that the interference value among the uplink signals is greater than or equal to A, the minimizing mean square error is determined as the uplink weighted value calculation manner, that is, the minimizing mean square error is the first weighted value calculation manner and is suitable for a case of a relatively large interference among the uplink signals; and in response to determining that the interference value among the uplink signals is less than A, the maximum ratio combination is determined as the uplink weighted value calculation manner, that is, the maximum ratio combining is the second weighted value calculation manner and is suitable for a case of a relatively small interference among the uplink signals.

It can be understood that, in the related art, the combination processing of the uplink signals received by the first radio remote unit needs to be performed by the baseband pool, and in the embodiments of the present application, the first radio remote unit may implement the combination processing of the received uplink signals without centralized processing in the baseband pool.

In step S330, the first radio remote unit calculates combination weighted values in the uplink weighted value calculation manner.

In the embodiments of the present application, after the uplink weighted value calculation manner is determined, the first radio remote unit may calculate the combination weighted values in the uplink weighted value calculation manner.

It is to be noted that, in the embodiments of the present application, the combination weighted values are used for combining the uplink signals.

In the embodiments of the present application, in response to determining that the uplink weighted value calculation manner is the first weighted value calculation manner, the first radio remote unit calculates the combination weighted values in the first weighted value calculation manner; and in response to determining that the uplink weighted value calculation manner is the second weighted value calculation manner, the first radio remote unit calculates the combination weighted values in the second weighted value calculation manner.

In an embodiment of the present application, in response to determining that the uplink weighted value calculation manner is the minimizing mean square error, the first radio remote unit calculates the combination weighted values according to the minimizing mean square error; and in response to determining that the uplink weighted value calculation manner is the maximum ratio combination, the first radio remote unit calculates the combination weighted values according to the maximum ratio combination. The minimizing mean square error and the maximum ratio combination both are the related art, which will not be repeated here.

In step S340, the first radio remote unit combines the uplink signals according to the combination weighted values to acquire the first signal.

In an embodiment of the present application, after the combination weighted values are determined, the first radio remote unit combines the uplink signals according to the combination weighted values to acquire the first signal.

It can be understood that, in the embodiments of the present application, when the first radio remote unit receives the uplink signals, the first radio remote unit performs the combination processing on the uplink signals to acquire the first signal. Compared with the uplink signals, a signal space dimension of the first signal is changed, and the data amount is reduced. Therefore, the first radio remote unit uploads the first signal, which compared with directly uploading the uplink signals greatly reduces the data amount of uplink transmission.

FIG. 4 is an exemplarily diagram of combining uplink signals according to an embodiment of the present application. As shown in FIG. 4, the first radio remote unit receives the uplink signals through four radio frequency antennas, and the uplink signals include the signal sent by the user 1 and the signal sent by the user 2. That is, the first radio remote unit actually receives 4-streams data through the four radio frequency antennas, and the 4-streams data may constitute the signals sent by the user 1 and by the user 2. Therefore, the first radio remote unit combines the 4-streams data to acquire 2-streams data, which is equivalent to reducing the data amount of subsequent uplink transmission.

In step S220, the first radio remote unit uploads the first signal to the baseband pool.

In the embodiments of the present application, after the first radio remote unit performs the combination processing on the uplink signals to acquire the first signal, the first signal may be uploaded to the baseband pool, and the baseband pool may perform a preset physical layer sub-layer processing on the first signal.

It can be understood that, in the embodiments of the present application, in response to the first radio remote unit being directly connected to the baseband pool, the first radio remote unit may directly upload the first signal to the baseband pool; and in response to the first radio remote unit being not directly connected to the baseband pool, the first radio remote unit may upload the first signal to a higher-stage radio remote unit directly connected to the first radio remote unit, and finally upload the first signal to the baseband pool through continuous uplink transmission.

It can be understood that, in the embodiments of the present application, since the first signal is a signal acquired after the combination processing is performed on the uplink signals, and the data amount of the first signal is much smaller than that of the uplink signals, thus reducing the data amount which the first radio remote unit needs to upload to the baseband pool.

It is to be noted that, in the embodiments of the present application, the baseband pool performs the physical layer sub-layer processing on a second signal, which may include modulation and demodulation, codec, etc. The specific physical layer sub-layer processing is not limited in the embodiments of the present application.

It is to be noted that, in the embodiments of the present application, after the step S210, the first radio remote unit performs the space-multiplexing performance evaluation on the uplink signals according to the preset space-multiplexing performance evaluation strategy to acquire the information about the space-multiplexing performance evaluation. The first radio remote unit uploads the information about the space-multiplexing performance evaluation to the baseband pool.

In the embodiments of the present application, the preset space-multiplexing performance evaluation strategy is actually to evaluate a spatial correlation among the uplink signals. The specific preset space-multiplexing performance evaluation strategy is not limited in the embodiments of the present application.

In an embodiment, the preset space-multiplexing performance evaluation strategy may perform the evaluation by the presence or absence of a signal or a spatial correlation inequality.

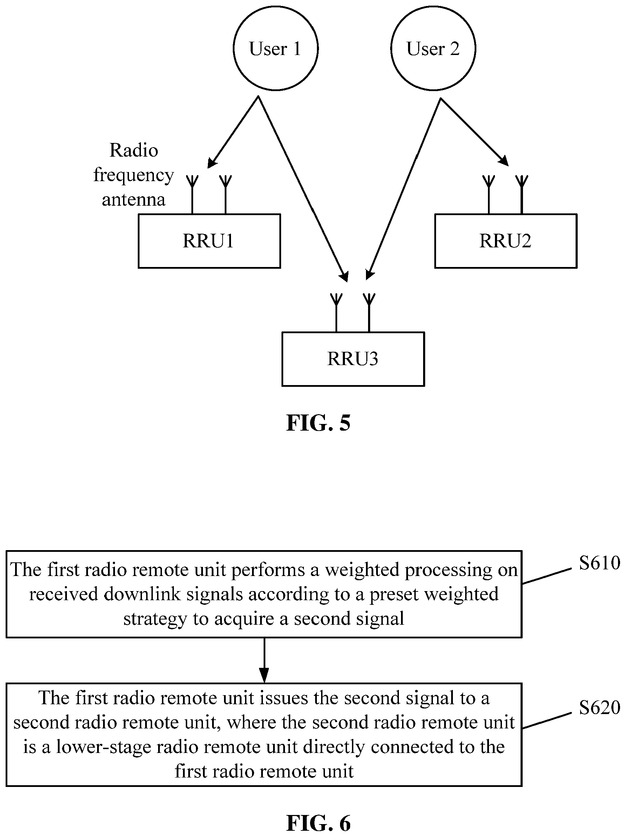

In an embodiment of the present application, the first radio remote unit may perform the space-multiplexing performance evaluation according to the presence or absence of the signal. FIG. 5 is an exemplarily diagram of signal transmission according to an embodiment of the present application. As shown in FIG. 5, the user 1 sends a signal to RRU1 and RRU3, while the RRU2 cannot receive the signal due to a too far distance and a too large path loss. Likewise, the user 2 sends a signal to RRU2 and RRU3, and RRU1 does not receive the signal. Therefore, the RRU1 and the RRU2 only have the signal sent by the user 1 or the signal sent by the user 2, i.e., the signal sent by the user 1 and the signal sent by the user 2 have a low spatial correlation, while the RRU3 has two signals at the same time, which has a high spatial correlation. The signal sent by the user 1 and the signal sent by the user 2 both are uplink signals.

In an embodiment, the first radio remote unit may perform the space-multiplexing performance evaluation according to the spatial correlation inequality, i.e., inequality (1). The inequality (1) is as follows:

$$\frac{|\sum_{n=1}^{N-1} R_{1,n} * R_{2,n}^*|}{\sqrt{\sum_{n=0}^{N-1} R_{1,n} * R_{1,n}^*}\sqrt{\sum_{n=0}^{N-1} R_{2,n} * R_{2,n}^*}} < \text{th} \qquad (1)$$

The first radio remote unit manages N radio frequency antennas, i.e., An, n = 0, 1,..., N-1, N is a natural number greater than or equal to 1, $R_{1,n}$ is a signal sent by the user 1 and received by the radio frequency antenna An, R2,n is a signal sent by the user 2 and received by the radio frequency antenna An, th is a threshold constant and may be set between 0 and 1, the smaller the th, the lower the spatial correlation among the uplink signals satisfying the inequality (1). The specific value of th is not limited in the embodiments of the present application. The signal sent by user 1 and the signal sent by the user 2 both are uplink signals. That is, in a case where the inequality (1) holds, the spatial correlation among the uplink signals received by the first radio remote unit is relatively low.

It is to be noted that in the embodiments of the present application, since the signals received by the first radio remote unit are all uplink signals, that is, the number of uplink signals may be relatively large, therefore, the step in which the first radio remote unit performs the space-multiplexing performance evaluation on the uplink signals according to the preset space-multiplexing performance evaluation strategy is actually an evaluation of the spatial correlation between each two uplink signals, and finally the information about the space-multiplexing performance evaluation is constituted.

It can be understood that the information about the space-multiplexing performance evaluation acquired by the first radio remote unit is finally uploaded to the baseband pool, and other redundant information does not need to be uploaded to the baseband pool, thus reducing the amount of uploaded data, the baseband pool does not need to perform a large amount of analysis and evaluations, and the final decision may be made directly according to the information about the space-multiplexing performance evaluation.

In the embodiments of the present application, after the information about the space-multiplexing performance evaluation is received, the baseband pool may determine a space-multiplexing matching decision according to the information about the space-multiplexing performance evaluation.

It can be understood that, in the related art, the signal processing performed on the uplink signals to acquire the first signal, and the space-multiplexing performance evaluation performed on the uplink signals to acquire the information about the space-multiplexing performance evaluation all need to be centralized processed in the baseband pool. In the present application, both the signal processing and the space-multiplexing performance evaluation may be performed by the first radio remote unit, therefore, the baseband pool can directly obtain related information, that is, the baseband pool may only make a decision, and in this process of making the decision, the data amount transmitted between the first radio remote unit and the baseband pool will also be reduced due to the processing, by the first radio remote unit, of the uplink signals.

It is to be noted that in the embodiments of the present application, in response to determining that the first radio remote unit does not belong to a lowest stage of the at least one stage, the first radio remote unit may also perform the signal processing on downlink signals and issue the downlink signals. FIG. 6 is a flowchart two of a signal processing method according to an embodiment of the present application, and the method includes steps S610 and S620.

In step S610, the first radio remote unit performs a weighted processing on received downlink signals according to a preset weighted strategy to acquire a second signal.

In the embodiments of the present application, the first radio remote unit may receive the downlink signals and perform the weighted processing on the downlink signals, and the downlink signals after the weighted processing are the second signal.

It is to be noted that, in the embodiments of the present application, in response to determining that the first radio remote unit belongs to the lowest stage in the at least one stage, that is, when there is no lower-stage radio remote unit connected to the first radio remote unit, the received downlink signals are directly issued to a user terminal.

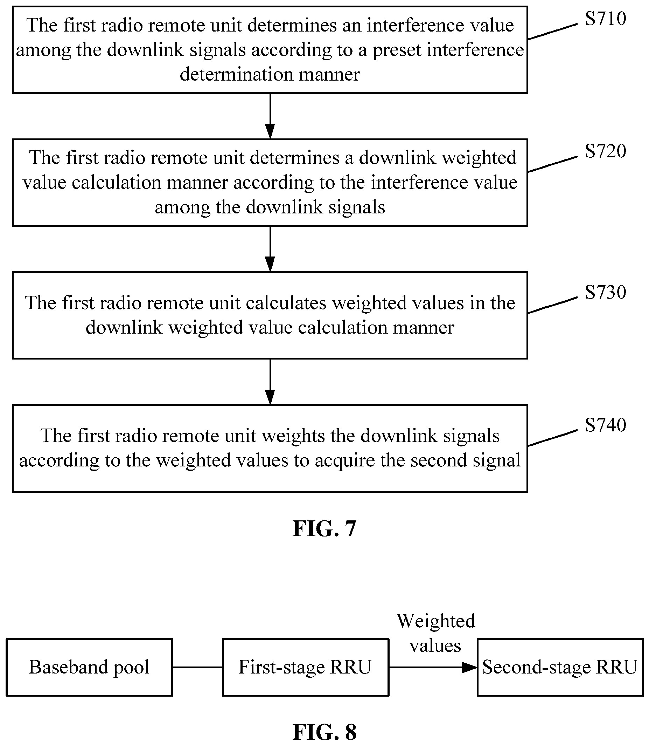

In the embodiments of the present application, FIG. 7 is a flowchart of performing a weighted processing on downlink signals according to an embodiment of the present application. As shown in FIG. 7, the weighted processing includes steps S710 to S740.

In step S710, the first radio remote unit determines an interference value among the downlink signals according to a preset interference determination manner.

In the embodiments of the present application, in response to determining that the downlink signals are received, the first radio remote unit may determine the interference value among the downlink signals according to the preset interference determination manner.

It is to be noted that, in the embodiments of the present application, the method of determining the interference value among the downlink signals by the first radio remote unit is the same as the method of determining the interference value among the uplink signals by the first radio remote unit, except that the determination object is the uplink signals or the downlink signals. How to determine the interference value among the uplink signals has been explained in step S310, and therefore, which will not be repeated here.

In step S720, the first radio remote unit determines a downlink weighted value calculation manner according to the interference value among the downlink signals.

In the embodiments of the present application, in response to receiving the downlink signals, the first radio remote unit determines the downlink weighted value calculation manner according to the interference value among the downlink signals.

In the embodiments of the present application, the step in which the first radio remote unit determines the downlink weighted value calculation manner according to the interference value among the downlink signals includes steps described below, in response to the interference value among the downlink signals being greater than or equal to a preset interference threshold, the first radio remote unit determines a third weighted value calculation manner as the downlink weighted value calculation manner; and in response to the interference value among the downlink signals being less than the preset interference threshold, the first radio remote unit determines a fourth weighted value calculation manner as the downlink weighted value calculation manner.

It is to be noted that, in the embodiments of the present application, the preset interference threshold is stored in the first radio remote unit, and the specific preset interference threshold is not limited in the embodiments of the present application.

It is to be noted that, in the embodiments of the present application, weighted value calculation manners suitable for the downlink signals are preset in the first radio remote unit, and the specific weighted value calculation manners suitable for the downlink signals are not limited in the embodiments of the present application.

Exemplarily, in the embodiments of the present application, the weighted value calculation manners, preset in the first radio remote unit, suitable for the downlink signals include maximum ratio transmission and zero-forcing, and the preset interference threshold is B. In response to the interference value among the downlink signals being greater than or equal to B, the zero-forcing is determined as the downlink weighted value calculation manner, that is, the zero-forcing is the third weighted value calculation manner and is suitable for a case of a relatively large interference among the downlink signals; and in response to the interference value among the downlink signals being less than B, the maximum ratio transmission is determined as the downlink weighted value calculation manner, that is, the maximum ratio transmission is the fourth weighted value calculation manner and is suitable for a case of a relatively small interference among the downlink signals.

In step S730, the first radio remote unit calculates weighted values in the downlink weighted value calculation manner.

In the embodiments of the present application, after the downlink weighted value calculation manner is determined, the first radio remote unit may calculate the combination weighted values in the downlink weighted value calculation manner.

It is to be noted that, in the embodiments of the present application, the weighted values are used for performing weighted shaping on the downlink signals.

In the embodiments of the present application, in response to determining that the downlink weighted value calculation manner determined by the first radio remote unit is the third weighted value calculation manner, the first radio remote unit calculates the weighted values in the third weighted value calculation manner; and in response to determining that the downlink weighted value calculation manner determined by the first radio remote unit is the fourth weighted value calculation manner, the first radio remote unit calculates the weighted values in the fourth weighted value calculation manner.

In an embodiment, in response to determining that the downlink weighted value calculation manner is the zero-forcing, the first radio remote unit calculates the weighted values according to the zero-forcing; and in response to determining that the downlink weighted value calculation manner is the maximum ratio transmission, the first radio remote unit calculates the weighted values according to the maximum ratio transmission. The zero-forcing and the maximum ratio transmission both are the related art, which will not be repeated here.

In step S740, the first radio remote unit weights the downlink signals according to the weighted values to acquire the second signal.

In the embodiments of the present application, after the weighted values are determined, the first radio remote unit weights the downlink signals according to the weighted values to acquire the second signal.

It can be understood that, in the embodiments of the present application, in response to receiving the downlink signals, the first radio remote unit performs the weighted processing on the downlink signals to acquire the second signal. Compared with the downlink signals, a signal space dimension of the second signal is changed, and the data amount is reduced. Therefore, the first radio remote unit issues the second signal, which compared with directly issuing the downlink signals greatly reduces the data amount of downlink transmission.

It is to be noted that, in the embodiments of the present application, the determination of the uplink weighted value calculation manner or the downlink weighted value calculation manner and the calculation of the combination weighted values or the weighted values may be implemented not only by the first radio remote unit, but also by a higher-stage radio remote unit directly connected to the first radio remote unit, which is aimed at a situation that processing capacity of the first radio remote unit is insufficient. The higher-stage radio remote unit calculates the combination weighted values or the weighted values and issues it to the first radio remote unit, and the first radio remote unit combines or weights the first signal. When the first radio remote unit is a highest-stage radio remote unit directly connected to the baseband pool, the baseband pool may also calculate and issue the weighted values. The method of calculating the weighted values by the baseband pool is the same as the method of calculating the weighted values by the first radio remote unit.

FIG. 8 is an exemplarily diagram of issuing weighted values according to an embodiment of the present application. As shown in FIG. 8, in a 3-stages distributed antenna system, the weighted values that need to be combined or weighted by a second-stage radio remote unit are uniformly calculated and then issued by a first-stage radio remote unit.

In step S620, the first radio remote unit issues the second signal to a second radio remote unit, where the second radio remote unit is a lower-stage radio remote unit directly connected to the first radio remote unit.

In the embodiments of the present application, after the second signal is acquired, the first radio remote unit issues the second signal to the second radio remote unit, where the second radio remote unit is the lower-stage radio remote unit directly connected to the first radio remote unit.

It can be understood that, in the embodiments of the present application, the second radio remote unit may perform the further signal transmission according to the received second signal. The specific operations performed by the second radio remote unit are not limited in the embodiments of the present application.

A signal processing method is provided in the embodiments of the present application and is applied to the multi-stage distributed antenna system. The first radio remote unit performs the signal processing on the received uplink signals according to the preset combination strategy to acquire the first signal, where the first radio remote unit is a radio remote unit of any stage in the at least one stage; and the first radio remote unit uploads the first signal to the baseband pool. That is, in the technical solution of the embodiments of the present application, the first radio frequency remote unit, having the related capability of signal processing, can perform the signal processing and the space-multiplexing performance evaluation on the received signals, thereby reducing the data amount to be sent to the baseband pool and satisfying requirements of a large-scale network.

Embodiment two

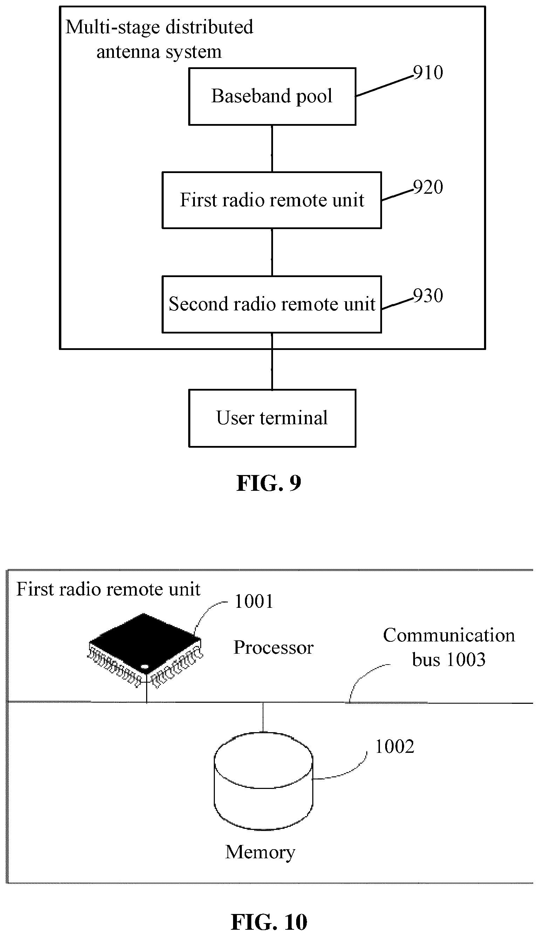

FIG. 9 is a structural diagram of a multi-stage distributed antenna system according to an embodiment of the present application. As shown in FIG. 9, a multi-stage distributed antenna system includes a baseband pool 910 and at least one first radio remote unit 920, where the at least one radio remote unit is divided into at least one stage.

The first radio remote unit 920 is configured to perform, according to a preset combination strategy, a combination processing on received uplink signals to acquire a first signal, and upload the first signal to the baseband pool 910, where the first radio remote unit 920 is a radio remote unit of a stage in the at least one stage.

The baseband pool 910 is configured to receive the first signal.

In an embodiment, the first radio remote unit 920 is further configured to perform, according to a preset space-multiplexing performance evaluation strategy, a space-multiplexing performance evaluation on the uplink signals to acquire information about the space-multiplexing performance evaluation, and upload the information about the space-multiplexing performance evaluation to the baseband pool 910.

The baseband pool 910 is further configured to receive the information about the space-multiplexing performance evaluation.

In an embodiment, when the first radio remote unit does not belong to a lowest stage in the at least one stage, the system further includes a second radio remote unit 930, where the second radio remote unit 930 is a lower-stage radio remote unit directly connected to the first radio remote unit 920.

The first radio remote unit 920 is further configured to perform, according to a preset weighted strategy, a weighted processing on received downlink signals to acquire a second signal, and issue the second signal to the second radio remote unit 930.

The second radio remote unit 930 is configured to receive the second signal.

A multi-stage distributed antenna system is provided in the embodiments of the present application. The first radio remote unit performs the signal processing on the received uplink signals according to the preset combination strategy to acquire the first signal, where the first radio remote unit is a radio remote unit of a stage in the at least one stage; and the first radio remote unit uploads the first signal to the baseband pool. That is, in the technical solution of the embodiments of the present application, the first radio frequency remote unit, having the related capability of signal processing, can perform the signal processing and the space-multiplexing performance evaluation on the received signals, thereby reducing the data amount to be sent to the baseband pool and satisfying requirements of a large-scale network.

FIG. 10 is a structural diagram of a first radio remote unit according to an embodiment of the present application. As shown in FIG. 10, a first radio remote unit includes a processor 1001, a memory 1002 and a communication bus 1003.

The communication bus 1003 is configured to implement a connection communication between the processor 1001 and the memory 1002.

The processor 1001 is configured to execute a signal processing program stored in the memory 1002 to perform the signal processing method described above.

The embodiments of the present application further provide a computer-readable storage medium storing at least one program. The at least one program is executable by at least one processor to perform the signal processing method described above. The computer readable storage medium may be a volatile memory, such as a random access memory (RAM); or may be a non-volatile memory, such as a read only memory (ROM), a flash memory, a hard disk drive (HDD), a solid-state drive (SSD) or a device including one or any combination of the memories described above, such as a mobile phone, a computer, a tablet device, a personal digital assistant, etc.

It should be understood by those skilled in the art that the embodiments of the present application may be provided as methods, systems and computer program products. Therefore, the present application can take a form of a hardware embodiment, a software embodiment, or a combination of software and hardware embodiments. Moreover, the present application may take a form of a computer program product implemented on at least one storage medium (including, but not limited to, a disk memory and an optical memory) that includes computer-usable program codes.

The present application is described with reference to at least one of flowcharts and block diagrams of methods, apparatus (systems) and computer program products according to the embodiments of the present application. It can be understood that computer program instructions may be used for implementing each flow in the flowcharts and/or each block in the block diagrams, and a combination of flows in the flowcharts and/or a combination of blocks in the block diagrams. These computer program instructions may be provided for a processor of a general-purpose computer, a special-purpose computer, an embedded processor or another programmable signal processing device to produce a machine, so that instructions, which are executed via the processor of the computer or another programmable signal processing device, produce a means for implementing functions specified in at least one flow in the flowcharts, one or more blocks in the block diagrams, or at least one flow in the flowcharts and at least one block in the block diagrams.

These computer program instructions can also be stored in a computer-readable memory which can direct the computer or another programmable signal processing device to operate in a particular manner, so that the instructions stored in the computer-readable memory produce a manufactured product including an instruction means. The instruction means implements the functions specified in at least one flow in the flowcharts, at least one block in the block diagrams, or at least one flow in the flowcharts and at least one block in the block diagrams.

These computer program instructions may also be loaded onto the computer or another programmable signal processing device, so that a series of operations and steps are performed on the computer or another programmable device to produce processing implemented by the computer. Therefore, instructions executed on the computer or another programmable device provide steps for implementing the functions specified in at least one flow in the flowcharts, at least one block in the block diagrams, or at least one flow in the flowcharts and at least one block in the block diagrams.

**Claims**

1. A signal processing method, applied to a multi-stage distributed antenna system which comprises a baseband pool and at least one radio remote unit divided into at least one stage,
   the method comprising:

   performing, by a first radio remote unit, a combination processing on received uplink signals according to a preset combination strategy to acquire a first signal; wherein the first radio remote unit is a radio remote unit of a stage in the at least one stage; and
   uploading, by the first radio remote unit, the first signal to the baseband pool.

2. The method of claim 1, wherein after acquiring the first signal, the method further comprises:

    performing, by the first radio remote unit, a space-multiplexing performance evaluation on the uplink signals according to a preset space-multiplexing performance evaluation strategy to acquire information about the space-multiplexing performance evaluation; and
    uploading, by the first radio remote unit, the information about the space-multiplexing performance evaluation to the baseband pool.

3. The method of claim 1, wherein in a case where the first radio remote unit does not belong to a lowest stage in the at least one stage, the method further comprises:

    performing, by the first radio remote unit, a weighted processing on received downlink signals according to a preset weighted strategy to acquire a second signal; and
    issuing, by the first radio remote unit, the second signal to a second radio remote unit, wherein the second radio remote unit is a lower-stage radio remote unit directly connected to the first radio remote unit.

4. The method of claim 1, wherein performing, by the first radio remote unit, the combination processing on the received uplink signals according to the preset combination strategy to acquire the first signal comprises:

    determining, by the first radio remote unit, an interference value among the uplink signals according a preset interference determination manner;
    determining, by the first radio remote unit, an uplink weighted value calculation manner according to the interference value among the uplink signals;
    calculating, by the first radio remote unit, combination weighted values in the uplink weighted value calculation manner; and
    performing, by the first radio remote unit, a combination of the uplink signals according to the combination weighted values to acquire the first signal.

5. The method of claim 3, wherein performing, by the first radio remote unit, the weighted processing on the received downlink signals according to the preset weighted strategy to acquire the second signal comprises:

    determining, by the first radio remote unit, an interference value among the downlink signals according to a preset interference determination manner;
    determining, by the first radio remote unit, a downlink weighted value calculation manner according to the interference value among the downlink signals;
    calculating, by the first radio remote unit, weighted values in the downlink weighted value calculation manner; and
    weighting, by the first radio remote unit, the downlink signals according to the weighted values to acquire the second signal.

6. The method of claim 4, wherein determining, by the first radio remote unit, the uplink weighted value calculation manner according to the interference value among the uplink signals comprises:

    in response to the interference value among the uplink signals being greater than or equal to a preset interference threshold, determining, by the first radio remote unit, a first weighted value calculation manner as the uplink weighted value calculation manner; and
    in response to the interference value among the uplink signals being less than the preset interference threshold, determining, by the first radio remote unit, a second weighted value calculation manner as the uplink weighted value calculation manner.

7. The method of claim 5, wherein determining, by the first radio remote unit, the downlink weighted value calculation manner according to the interference value among the downlink signals comprises:

    in response to the interference value among the downlink signals being greater than or equal to a preset interference threshold, determining, by the first radio remote unit, a third weighted value calculation manner as the downlink weighted value the first radio remote unit calculation manner; and
    in response to the interference value among the downlink signals being less than the preset interference threshold, determining a fourth weighted value calculation manner as the downlink weighted value calculation manner.

8. A multi-stage distributed antenna system, comprising: a baseband pool and at least one first radio remote unit, wherein the at least one radio remote unit is divided into at least one stage;
the first radio remote unit is configured to: perform, according to a preset combination strategy, a combination processing on received uplink signals to acquire a first signal, and upload the first signal to the baseband pool; wherein the first radio remote unit is a radio remote unit of a stage in the at least one stage; and
the baseband pool is configured to receive the first signal.

9. The system of claim 8, wherein
the first radio remote unit is further configured to: perform, according to a preset space-multiplexing performance evaluation strategy, a space-multiplexing performance evaluation on the uplink signals to acquire information about the space-multiplexing performance evaluation, and upload the information about the space-multiplexing performance evaluation to the baseband pool; and
the baseband pool is further configured to receive the information about the space-multiplexing performance evaluation.

10. The system of claim 8, wherein in a case where the first radio remote unit does not belong to a lowest stage in the at least one stage, the system further comprises a second radio remote unit;
wherein the second radio remote unit is a lower-stage radio remote unit directly connected to the first radio remote unit;
the first radio remote unit is further configured to: perform, according to a preset weighted strategy, a weighted processing on received downlink signals to acquire a second signal, and issue the second signal to the second radio remote unit; and
the second radio remote unit is configured to receive the second signal.

11. A radio remote unit, comprising a processor, a memory and a communication bus;
wherein the communication bus is configured to implement a connection communication between the processor and the memory; and
the processor is configured to execute a signal processing program stored in the memory to perform the method of any one of claims 1 to 7.

12. A computer-readable storage medium, storing at least one program executable by at least one processor to perform the method of any one of claims 1 to 7.

| Baseband pool | | First-stage RRU | | Second-stage RRU |

(figure)

| | | First-stage RRU | | Second-stage RRU |

| | | | | Second-stage RRU |

**FIG. 1**

| A first radio remote unit performs a combination processing on received uplink signals according to a preset combination strategy to acquire a first signal, where the first radio remote unit is a radio remote unit of a stage in the at least one stage | S210 |

| The first radio remote unit uploads the first signal the baseband pool | S220 |

**FIG. 2**

| The first radio remote unit determines an interference value among the uplink signals according to a preset interference determination manner | S310 |

↓

| The first radio remote unit determines an uplink weighted value calculation manner according to the interference value among the uplink signals | S320 |

↓

| The first radio remote unit calculates combination weighted value in the uplink weighted value calculation manner | S330 |

↓

| The first radio remote unit combines the uplink signals according to the combination weighted values to acquire the first signal | S340 |

**FIG. 3**

| Signal sent by user 1 and signal sent by user 2 |

4-streams data

Radio frequency antennas

| First radio remote unit |

2-streams data

**FIG. 4**

**FIG. 5**

The first radio remote unit performs a weighted processing on received downlink signals according to a preset weighted strategy to acquire a second signal ⟋ S610

The first radio remote unit issues the second signal to a second radio remote unit, where the second radio remote unit is a lower-stage radio remote unit directly connected to the first radio remote unit ⟋ S620

**FIG. 6**

The first radio remote unit determines an interference value among the downlink signals according to a preset interference determination manner ⟋ S710

The first radio remote unit determines a downlink weighted value calculation manner according to the interference value among the downlink signals ⟋ S720

The first radio remote unit calculates weighted values in the downlink weighted value calculation manner ⟋ S730

The first radio remote unit weights the downlink signals according to the weighted values to acquire the second signal ⟋ S740

**FIG. 7**

| Baseband pool | — | First-stage RRU | Weighted values → | Second-stage RRU |

**FIG. 8**

Multi-stage distributed
antenna system

Baseband pool ————910

First radio remote unit ————920

Second radio remote unit ————930

User terminal

**FIG. 9**

First radio remote unit
— 1001

Processor

Communication
bus 1003

1002

Memory

**FIG. 10**

## INTERNATIONAL SEARCH REPORT

| International application No. |
|---|
| **PCT/CN2019/077268** |

**A. CLASSIFICATION OF SUBJECT MATTER**

H04B 7/04(2017.01)i; H04B 7/26(2006.01)i

According to International Patent Classification (IPC) or to both national classification and IPC

**B. FIELDS SEARCHED**

Minimum documentation searched (classification system followed by classification symbols)

H04B; H04L; H04W; H04Q

Documentation searched other than minimum documentation to the extent that such documents are included in the fields searched

Electronic data base consulted during the international search (name of data base and, where practicable, search terms used)

WPI, CNPAT, EPODOC: RRU, BBU, 射频拉远, 合并, 加权, 串联, 级联, 多级, 上级, 下级, 空分, 空间, 隔离, 相关性, 权值, 权重, radio remote unit, baseband unit, combine, serial, spatial, correlation, weight

**C. DOCUMENTS CONSIDERED TO BE RELEVANT**

| Category* | Citation of document, with indication, where appropriate, of the relevant passages | Relevant to claim No. |
|---|---|---|
| X | CN 101350647 A (DATANG MOBILE COMMUNICATIONS EQUIPMENT CO., LTD.) 21 January 2009 (2009-01-21) <br> claim 1, and description, page 9, paragraphs 2 and 3 | 1, 3-8, 10-12 |
| Y | CN 101350647 A (DATANG MOBILE COMMUNICATIONS EQUIPMENT CO., LTD.) 21 January 2009 (2009-01-21) <br> claim 1, and description, page 9, paragraphs 2 and 3 | 2, 9 |
| Y | CN 101267235 A (DATANG MOBILE COMMUNICATIONS EQUIPMENT CO., LTD.) 17 September 2008 (2008-09-17) <br> claims 2 and 3 | 2, 9 |
| X | CN 106211195 A (WUHAN RESEARCH INSTITUTE OF POSTS AND TELECOMMUNICATIONS) 07 December 2016 (2016-12-07) <br> claim 7 | 1, 3-8, 10-12 |
| Y | CN 106211195 A (WUHAN RESEARCH INSTITUTE OF POSTS AND TELECOMMUNICATIONS) 07 December 2016 (2016-12-07) <br> claim 7 | 2, 9 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 April 2019** | **29 May 2019** |

| Name and mailing address of the ISA/CN | Authorized officer |
|---|---|
| **State Intellectual Property Office of the P. R. China** <br> **No. 6, Xitucheng Road, Jimenqiao Haidian District, Beijing** <br> **100088** <br> **China** | |
| Facsimile No. **(86-10)62019451** | Telephone No. |

Form PCT/ISA/210 (second sheet) (January 2015)

**EP 3 764 559 A1**

**INTERNATIONAL SEARCH REPORT**

| International application No. |
| --- |
| **PCT/CN2019/077268** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 101964987 A (DATANG MOBILE COMMUNICATIONS EQUIPMENT CO., LTD.) 02 February 2011 (2011-02-02) entire document | 1-12 |
| A | CN 106685508 A (COMBA TELECOM TECHNOLOGY (GUANGZHOU) CO., LTD.) 17 May 2017 (2017-05-17) entire document | 1-12 |
| A | CN 105407506 A (CHENGDU TD TECH LTD.) 16 March 2016 (2016-03-16) entire document | 1-12 |

Form PCT/ISA/210 (second sheet) (January 2015)

## INTERNATIONAL SEARCH REPORT
### Information on patent family members

| International application No. |
| --- |
| **PCT/CN2019/077268** |

| Patent document cited in search report | | | Publication date (day/month/year) | Patent family member(s) | | | Publication date (day/month/year) |
| --- | --- | --- | --- | --- | --- | --- | --- |
| CN | 101350647 | A | 21 January 2009 | WO | 2009009959 | A1 | 22 January 2009 |
| CN | 101267235 | A | 17 September 2008 | JP | 2010521842 | A | 24 June 2010 |
| | | | | WO | 2008113281 | A1 | 25 September 2008 |
| | | | | US | 2010142390 | A1 | 10 June 2010 |
| | | | | KR | 20100025505 | A | 09 March 2010 |
| | | | | EP | 2129004 | A1 | 02 December 2009 |
| CN | 106211195 | A | 07 December 2016 | None | | | |
| CN | 101964987 | A | 02 February 2011 | None | | | |
| CN | 106685508 | A | 17 May 2017 | WO | 2018145529 | A1 | 16 August 2018 |
| CN | 105407506 | A | 16 March 2016 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810187882